# FASCICULE DE BREVET EUROPEEN

(11) **EP 1 414 755 B1**
(45) Date de publication et mention de la délivrance du brevet: **17.11.2004**
(21) Numéro de dépôt: 02764921.9
(22) Date de dépôt: 20.06.2002
(51) Int. Cl.: C02F 1/78, G21F 9/06

(54) **PROCEDE DE TRAITEMENT D'UN EFFLUENT, NOTAMMENT RADIOACTIF, CONTENANT DES MATIERES ORGANIQUES**
VERFAHREN ZUR BEHANDLUNG EINES ORGANISCHES MATERIAL ENTHALTENDEN AUSTRAGSSTROMS, INSBESONDERE EINES RADIOAKTIVEN AUSTRAGSSTROMS
METHOD FOR TREATING AN EFFLUENT, ESPECIALLY A RADIOACTIVE EFFLUENT, CONTAINING ORGANIC MATTER

(30) Priorité: 22.06.2001 FR 0108258
(43) Date de publication de la demande: 06.05.2004
(73) Titulaire: Commissariat A L'Energie Atomique, 75752 Paris 15ème (FR)
(72) Inventeur: FULCONIS, Jean-Michel, F-30150 Roquemaure (FR); DELAGRANGE, Jacques, F-30130 Saint-Paulet de Caisson (FR); SARRAZIN, Jean, F-34980 Montferrier sur Lez (FR)
(74) Mandataire: Poulin, Gérard
(86) Numéro de dépôt international: PCT/FR2002/002135
(87) Numéro de publication internationale: WO 2003/000598

(56) Documents cités:
- EP-A- 0 634 365
- EP-A- 0 732 156
- FR-A- 2 534 900
- US-A- 3 952 088

## Description

### Domaine technique

La présente invention concerne un procédé de traitement d'un effluent, notamment radioactif, contenant des matières organiques en solution en vue précisément d'éliminer lesdites matières organiques.

Le procédé selon l'invention s'applique en particulier au traitement des effluents radioactifs issus des étapes de décontamination des usines de retraitement des combustibles irradiés.

Le domaine technique de l'invention, peut, de manière générale être défini comme celui du traitement des effluents, en particulier des effluents aqueux, contenant des matières, des composés, organiques dans le but d'éliminer ces matières organiques.

Des effluents contenant des matières organiques se rencontrent dans de nombreuses industries, et en particulier dans l'industrie nucléaire.

En effet, par exemple, différentes étapes de décontamination des installations nucléaires font appel à des solutions aqueuses additionnées de divers réactifs organiques.

D'une manière schématique, on peut classer en deux familles les molécules organiques utilisées lors des étapes d'assainissement ou de décontamination des usines de traitement des combustibles nucléaires irradiés.

La première famille comprend les molécules tensioactives ou surfactants utilisés en solution aqueuse pour éliminer des installations le TBP (Tributyl phosphate) et ses produits de dégradation qui sont principalement le DBP (Dibutyl Phosphate) et le MBP (Monobutyl Phosphate), et permettre ainsi la récupération des radioéléments piégés dans ces « graisses ».

Plusieurs procédés sont connus, qui décrivent l'utilisation de différentes formulations tensioactives comprenant des mélanges de tensioactifs.

Les tensioactifs utilisés ont des formules chimiques très variées mais ils possèdent tous une chaîne carbonée plus ou moins longue formant leur partie hydrophobe.

Ainsi le document EP-A-526 305 décrit-il un procédé de décontamination radioactive par l'usage de mousse tensioactive.

Le document EP-A-0 674 323, est, de manière analogue, relatif à un procédé de décontamination radioactive par l'usage de gel tensioactif.

La seconde famille de composés organiques décontaminants comprend les agents complexants ou chélatants utilisés pour mettre en solution certains radioéléments. Ces molécules complexantes sont la plupart du temps des mono- ou polyacides carboxyliques, et elles possèdent donc toutes une structure carbonée généralement courte, à savoir avec moins de 5 atomes de carbone.

Ainsi, le document US-A-5 386 078 concerne t'il la décontamination d'un objet métallique par mise en contact avec une solution aqueuse d'acide formique, le document US-A-5 322 644 est relatif à la décontamination de matériaux radioactifs à l'aide d'une solution comprenant de l'acide EthyléneDiamineTétracétique (EDTA), un carbonate et du peroxyde d'hydrogène, et enfin le document US-A-5 564 105 a trait au traitement de solutions aqueuse de décontamination contenant un agent complexant qui est le formiate de vanadium, ou un acide carboxylique tel que l'acide oxalique, l'acide citrique, l'acide picolinique, l'acide nitriloacétique, l'EDTA, l'acide formique ou l'acide hydroéthylénediaminetétracétique (HEDTA).

L'utilisation de ces produits aussi bien de la première que de la seconde famille donne de bons résultats en matière de facteurs de décontamination, mais pose par contre de multiples problèmes d'exutoire parmi lesquels on peut citer par exemple :
- des problèmes de moussabilité lors des étapes de concentration avant post traitement notamment par vitrification ou bitumage ;
- des problèmes de perturbation des étapes ultérieures de précipitation chimique ;
- des problèmes de modification de réactivité chimique des bitumes de confinement.

Pour ces raisons, une destruction partielle ou totale des matières organiques contenues dans les effluents de décontamination est la plupart du temps nécessaire. Il en est de même pour d'autres effluents, éventuellement non radioactifs ayant d'autres origines.

La destruction des matières organiques contenues dans des effluents a été exposée dans de nombreux documents.

Ainsi le document US-A-5 894 077, décrit un procédé de traitement d'effluents radioactifs contenant des produits de fission et des composés organiques complexants et le document US-A-5 536 389 expose un procédé de traitement d'effluents radioactifs contenant de la matière organique, à savoir notamment des complexants, et des radioéléments tels que le technétium et/ou le ruthénium, dans lesquels les matières organiques sont détruites électrolytiquement à l'anode par réaction d'oxydation.

Le document US-A-4 693 833 est relatif à un procédé de traitement d'eaux usées radioactives contenant des matières organiques telles que des acides, des agents de décontamination et des tensioactifs par oxydation avec du peroxyde d'hydrogène en présence d'ions fer et cuivre en tant que catalyseurs et à une température de 60 à 90 °C.

La destruction de matières organiques présentes dans des solutions aqueuses n'intéresse pas seulement le domaine du nucléaire, ainsi, le document US-A-3 725 226 concerne l'inactivation électrochimique d'agents pathogènes, de nitrates, de nitrites, d'acide nitrique et de composés organiques tandis que le document US-A-5 320 718 décrit un procédé pour éliminer les matières organiques oxydables d'une solution aqueuse dans lequel on utilise une cellule d'électrolyse avec un électrolyte polymère solide. Les composés organiques sont introduits dans le compartiment anodique et l'anode est portée à différents potentiels qui permettent d'absorber les composés organiques sur le catalyseur de l'anode puis de les détruire par oxydation.

Tous les procédés d'élimination de composés, de substances, de matières organiques décrits ci-dessus, bien qu'ils soient pour certains relativement efficaces, posent un certain nombre de problèmes qui rendent leur application délicate, en particulier dans le cas du traitement des effluents de l'industrie nucléaire tels que les effluents issus de l'assainissement, de la décontamination d'une usine de traitement de combustibles nucléaires irradiés.

Ainsi, les procédés électrolytiques nécessitent la création d'une installation, spécialement dédiée à cette opération et comprenant un électrolyseur, des systèmes d'électrodes, etc., cette installation, dans le cas du traitement d'effluents radioactifs, est contaminée dès sa mise en service et constitue un élément de plus à assainir ;
- les procédés au cérium posent le problème de la résistance des installations au cérium qui est un agent corrosif, y compris pour les aciers constitutifs des cuves de minéralisation, pour pallier cet inconvénient, l'utilisation du cérium nécessite la construction d'un réacteur de minéralisation résistant en un matériau spécial et coûteux, exclusivement consacré à cette opération ;
- dans certains cas, la minéralisation est incomplète et aboutit à des sous-produits qui sont encore organiques. Ces sous-produits sont généralement des acides carboxyliques à chaîne courte du type C2 ou C3, dont il convient de vérifier l'innocuité vis-à-vis des procédés de post-traitement de l'exutoire ;
- les procédés au peroxyde d'hydrogène nécessitent une température de travail élevée, d'au moins 60°C, ce qui nécessite de réchauffer le réacteur de traitement, ainsi que l'ajout de différents catalyseurs à base de métaux, coûteux en terme d'exutoire ;
- enfin, la plupart des procédés, décrits plus haut, sont efficaces pour traiter des matières organiques présentes en solution aqueuse d'acide (pH inférieur à 7). Or, il peut être notamment envisagé des étapes d'assainissement faisant appel à des solutions aqueuses basiques (pH supérieur à 7), les procédés, précédemment cités, peuvent alors perdre leur efficacité (par exemple précipitation du cérium insoluble en milieu basique).

Il existe donc un besoin pour un procédé de traitement d'un effluent aqueux contenant des matières organiques en solution, en particulier d'effluents radioactifs, issus par exemple de la décontamination des usines de traitement de combustibles nucléaires irradiés qui, entre autres, ne nécessite pas d'installation complexe pour sa mise en oeuvre, qui permette une destruction totale des matières organiques, qui opère à une température peu élevée, qui soit rapide, simple et fiable, qui permette de traiter tous types d'effluents, quel que soit, par exemple, leur pH, la nature des matières organiques et leur concentration.

Le but de la présente invention est de fournir un procédé de traitement d'un effluent aqueux contenant des matières, substances, composés organiques, qui réponde, entre autres, au besoin mentionné ci-dessus.

Le but de la présente invention est encore de fournir un procédé de traitement d'effluents aqueux contenant des matières organiques en solution, qui ne présente pas les inconvénients, défauts, limitations et désavantages des procédés de l'art antérieur et qui résolve les problèmes des procédés de l'art antérieur.

Ce but et d'autres encore sont atteints, conformément à l'invention, par un procédé de traitement d'un effluent aqueux contenant des matières organiques en solution, comprenant les étapes successives suivantes :
- l'effluent est rendu basique;
- l'effluent rendu basique est minéralisé par mise en contact avec un agent d'oxydation gazeux;
- l'effluent basique minéralisé est rendu acide ;
- l'effluent rendu acide est de nouveau minéralisé par mise en contact avec l'agent d'oxydation gazeux.

Le procédé selon l'invention comporte essentiellement deux étapes spécifiques, dites « étapes de minéralisation », par mise en contact de l'effluent avec un agent d'oxydation gazeux, qui se succèdent, s'enchaînent, de manière spécifique. La première des étapes de minéralisation est, selon l'invention, réalisée en milieu basique et la seconde des étapes de minéralisation est, selon l'invention, réalisée en milieu acide.

Les deux étapes sont distinctes, séparées et jouent chacune un rôle spécifique.

Selon l'invention, le procédé comporte une séquence spécifique de minéralisation comprenant d'abord une étape en milieu basique, puis une étape en milieu acide, qui s'enchaînent de manière spécifique.

La succession d'étapes spécifiques, selon l'invention, n'est ni décrite, ni suggérée par l'art antérieur.

On peut encore remarquer que le procédé selon l'invention résulte pour chaque étape d'un choix parmi une infinité de traitements possible, puis du choix d'une séquence spécifique des étapes choisies.

Le procédé selon l'invention permet la destruction quasi totale, voire totale, des matières organiques se trouvant dans l'effluent, quelle que soit la nature de ces matières organiques et leur concentration, quelle que soit, en outre, la nature de l'effluent, qui peut être, par exemple, radioactif et/ou acide.

Les matières organiques sont transformées en quasi-totalité ou en totalité, à l'issue des deux étapes du procédé de l'invention, en dioxyde de carbone gazeux qui peut être facilement évacué, éliminé, il ne subsiste, à l'issue du procédé de l'invention, aucun résidu organique solide ou liquide.

De ce fait, dans le cas du traitement d'effluents radioactifs issus, par exemple, de la décontamination des installations nucléaires, l'effluent final traité par le procédé de l'invention est parfaitement compatible avec les procédés de traitement ultimes, tels que la vitrification ou l'incorporation à une matrice bitumeuse.

Le procédé selon l'invention est simple, fiable, peu coûteux, et peut être mis en oeuvre très facilement dans des installations existantes. Le procédé selon l'invention ne nécessite pas d'installations spécifiques, complexes ou en des matériaux spécifiques, pour sa mise en oeuvre.

Avantageusement, le gaz oxydant est un mélange constitué d'ozone et d'au moins un autre gaz choisi, de préférence, parmi l'oxygène et l'azote.

On sait que dans le domaine du traitement des eaux usées la diminution de la teneur en matières organiques fait souvent appel à l'ozone comme agent d'oxydation, comme cela est décrit dans les documents US-6 080 531, US-3 952 088, EP-A-0 634 365 et US-4 029 578. L'ozone est l'oxydant de couples redox puissant, aussi bien en milieu acide que basique :
- à 25°C et pH = 0 E⁰O₃/O₂ = 2,075 V/ENH
- à 25°C et pH = 14 E⁰O₃/O₂ = 1,246 V/ENH

Cependant, l'utilisation de l'ozone en milieu acide pose un problème car il est possible que l'ozone forme avec les molécules organiques insaturées des tri ozonides par le biais de réaction d'additions nucléophiles sur les doubles liaisons aliphatiques selon le schéma suivant :

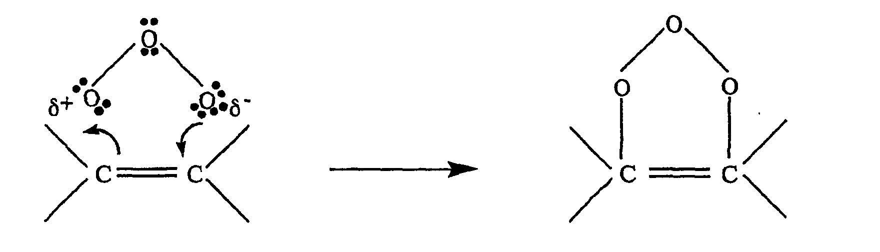

Ces tri ozonides sont des molécules instables dont la décomposition rapide peut donner lieu à des réactions explosives.

Grâce au procédé de l'invention dans lequel, de manière spécifique, on travaille dans un premier temps en milieu basique, toute possibilité de former des triozonides instables se trouve ainsi écartée. Le procédé selon l'invention surmonte ainsi un inconvénient majeur des procédés de l'art antérieur utilisant l'ozone. En effet, la formation des tri ozonides en milieu basique est impossible car dans un tel milieu, l'ozone réagit quasi instantanément avec les ions hydroxydes en solution pour former des espèces radicalaires très réactives (hydroperoxyde et superoxyde) qui ne peuvent pas donner lieu à des réactions moléculaires, telles que décrites plus haut. L'ozone est donc un oxydant de choix pour l'opération de minéralisation en milieu basique, mise en jeu dans le procédé de l'invention.

Avantageusement, l'effluent rendu basique a un pH supérieur à 9, de préférence supérieur à 12. Un tel pH assure un bon rendement du transfert d'ozone en solution.

Avantageusement, l'effluent est rendu basique par addition d'hydroxyde de métal alcalin ou alcalino-terreux, tel que l'hydroxyde de sodium, de potassium, de magnésium, de lithium ou de calcium, de préférence par addition d'hydroxyde de sodium, qui assure ensuite une excellente minéralisation des matières organiques en sels, par exemple, sodiques.

Avantageusement, l'hydroxyde est ajouté, dans l'effluent, à une concentration pour assurer une minéralisation optimale. Par exemple, dans le cas de l'hydroxyde de sodium, il est ajouté à une concentration supérieure ou égale à 1,4 g de sodium par gramme de COT (Carbone Organique Total) dans l'effluent, ce qui assure une minéralisation optimale.

Avantageusement, l'effluent basique minéralisé est rendu acide par addition d'une solution d'acide minéral, de préférence d'acide nitrique.

Avantageusement, la concentration finale en acide minéral, par exemple en acide nitrique, de l'effluent rendu acide est de 0,1 à 5 mol.L⁻¹.

Avantageusement, la première étape de minéralisation (en milieu basique) est suivie par mesure de la concentration des espèces en solution dans l'effluent à traiter, par exemple par chromatographie.

De préférence, les espèces en solution sont des formiate, acétate, glycolate, carbonate et oxalate, de préférence de métal alcalin, tel que le Na.

Avantageusement, la seconde étape de minéralisation est enclenchée lorsque la totalité des matières organiques est sous forme de sels d'acides carboxyliques.

Avantageusement, lesdits sels sont des carbonates et oxalates, de préférence de métal alcalin, tel que le sodium.

Avantageusement, les étapes de minéralisation sont réalisées à une température de 5 à 70°C, de préférence de 20 à 30°C. Le procédé selon l'invention est donc réalisé à faible température et ne nécessite pas généralement d'apport d'énergie extérieure.

Généralement, les matières organiques sont des tensioactifs ou surfactants, et/ou des complexants ou chélatants, etc..

L'effluent à traiter est généralement un effluent acide, notamment radioactif, tel que celui provenant de l'assainissement d'une installation nucléaire, par exemple une usine de retraitement de combustible irradié.

L'invention va maintenant être décrite de manière détaillée dans la description qui suit, donnée à titre illustratif et non limitatif, en référence aux dessins joints, dans lesquels :
- la figure 1 est un graphique qui représente l'évolution de la teneur en matières organiques (M. O.) en g.L⁻¹, en fonction du temps en heures, au cours de l'étape de minéralisation basique du procédé de l'invention. La courbe, en trait gras, représente la variation de la DCO et la courbe en trait fin, la variation de la COT ;
- la figure 2 est une vue en coupe schématique d'une installation pour la mise en oeuvre du procédé de l'invention.

Le procédé de l'invention est un procédé de traitement d'effluents aqueux, qui contiennent des matières organiques en solution.

Ces matières, composés, substances, molécules organiques sont généralement des tensioactifs ou surfactants, et/ou des complexants ou chélatants.

Les effluents peuvent, en outre, contenir d'autres matières, composés, substances inorganiques, minérales, par exemple des métaux, tels que le fer, le chrome, le nickel, etc., des radionucléides, tels que le plutonium, l'uranium, l'américium, etc..

Le procédé de l'invention s'applique avantageusement au traitement des effluents aqueux acides, c'est-à-dire dont le pH est inférieur à 7. Ces effluents contiennent, par exemple, un acide minéral, tel que l'acide nitrique.

Le procédé selon l'invention convient particulièrement pour traiter les effluents radioactifs.

Les effluents radioactifs peuvent être issus de tout type d'installation mettant en oeuvre des radioéléments. Ils proviennent ainsi généralement de l'industrie nucléaire, par exemple des centrales, laboratoires, usines de préparation du combustible ou de traitement du combustible irradié.

Les effluents traités sont, en particulier, les effluents issus de l'assainissement d'une installation nucléaire, telle qu'une usine de traitement du combustible irradié.

Comme on l'a déjà indiqué plus haut, le procédé selon l'invention permet de manière avantageuse, de traiter efficacement les effluents aqueux acides radioactifs et d'en minéraliser complètement les matières organiques.

Selon l'invention, dans une première étape, l'effluent est rendu basique.

De préférence, on fait en sorte que l'effluent rendu basique ait un pH supérieur à 9, de préférence supérieur à 12.

L'effluent est rendu basique, généralement par addition d'hydroxyde de métal alcalin ou alcalino-terreux, par exemple de sodium, de calcium, de lithium, de magnésium ou de potassium.

La base utilisée pour rendre l'effluent basique doit généralement être utilisée en excès par rapport au COT (Carbone Organique Total). Ainsi, dans le cas où l'effluent est rendu basique par addition d'hydroxyde de sodium, la concentration est généralement supérieure ou égale à 1,4 grammes de sodium par gramme de COT dans l'effluent.

On procède ensuite à la minéralisation de l'effluent rendu basique (étape appelée « minéralisation basique »), par mise en contact de celui-ci avec un agent d'oxydation gazeux.

La mise en contact de l'agent d'oxydation gazeux, avec l'effluent, est généralement réalisée par injection de l'oxydant gazeux, directement au sein de l'effluent à traiter, à minéraliser. En d'autres termes, on fait barboter, buller, l'agent d'oxydation gazeux dans l'effluent à traiter.

L'agent d'oxydation est généralement constitué par un mélange gazeux constitué d'ozone et d'au moins un autre gaz choisi, de préférence, parmi l'oxygène et l'azote.

Les proportions du mélange gazeux sont généralement telles qu'il contienne en volume de 0,5 à 20 % d'ozone et de 80 à 99,5 % du ou des autres gaz.

La minéralisation basique est généralement réalisée à une température de 5 à 70°C et, de préférence, de 20 à 30°C, ce qui est une température relativement basse par rapport à nombre de procédés de l'art antérieur.

Les réactions, qui se produisent, sont généralement caractérisées par la transformation des matières, substances organiques en sels, de préférence de métal alcalin, par exemple en sels sodés dans le cas où la solution a été rendue basique par de l'hydroxyde de sodium, d'acides carboxyliques.

Les espèces produites au cours de la réaction de minéralisation sont, par exemple, analysées par chromatographie liquide ionique à détection UV, et la nature chimique des principales espèces intermédiaires est identifiée par un couplage en ligne de la spectrométrie de masse et de la chromatographie.

Des analyses complémentaires sont réalisées, par exemple, par Résonance Magnétique Nucléaire (RMN) du ¹³C et du ³¹P.

Tout au long de la réaction, on assiste à la formation :
- de carbonate de sodium Na₂CO₃ (qui constitue le stade ultime de la minéralisation) ;
- d'oxalate de sodium Na₂(CO₂)₂ ;
- de phosphate de sodium Na₃PO₄ (le phosphore provient des espèces phosphorées, éventuellement présentes dans l'effluent, ces espèces sont principalement le TBP et ses produits de dégradation).

En outre, trois sels d'acides carboxyliques constituent les espèces intermédiaires prépondérantes formées par oxydation des chaînes carbonées des molécules organiques ; il s'agit :
- du formate de sodium NaHCO₂ ;
- du glycolate de sodium NaCO₂CH₂OH ;
- de l'acétate de sodium NaCO₂CH₃.

Durant la première moitié de la réaction, le fractionnement progressif par oxydation des chaînes alkyles des matières organiques donne principalement du carbonate de sodium (CO₃²⁻, 2Na⁺) et du formate de sodium (HCOO-Na+). Les fragments de chaînes carbonées issus de ces oxydations sont visibles par leur signal RMN à champ faible et leur influence sur l'absorbance à 210 nm du signal chromatographique, avec une augmentation du coefficient d'extinction molaire apparent.

A partir d'un taux de minéralisation de 50 %, trois nouveaux sels d'acides carboxyliques apparaissent : l'acétate de sodium (CH₃COO⁻Na⁺), le glycolate de sodium (CH₂OHCOO⁻Na⁺) et l'oxalate de sodium (C₂O₄²⁻2Na⁺). Les fragments de chaînes alkyles sont de moins en moins présents avec une disparition du signal RMN correspondant.

A partir d'un taux de minéralisation voisin de 70 %, on assiste à la disparition progressive des trois sels d'acides carboxyliques intermédiaires et à l'augmentation des quantités de carbonate de sodium et d'oxalate de sodium.

La fin de la réaction est caractérisée par la disparition complète de l'acétate de sodium, du glycolate de sodium et du formiate de sodium, au profit du carbonate de sodium et de l'oxalate de sodium, ainsi que du phosphate de sodium.

Les espèces chimiques formées ne dépendent pas de la molécule organique de départ car en milieu basique les espèces radicalaires formées réagissent de manière non spécifique. Quelle que soit la molécule carbonée, elle s'oxyde en un mélange d'oxalate de Na et de carbonate de Na.

Le procédé selon l'invention n'est donc absolument pas limité par la nature des matières organiques de l'effluent et est d'une application très générale.

Les spectres RMN du ¹³C d'un effluent type, c'est-à-dire une solution aqueuse tensioactive de décontamination d'une usine de traitement de combustible irradié, avant et après l'étape de minéralisation basique montrent que les chaînes carbonées, initialement présentes dans l'effluent, disparaissent au profit des motifs carbonate et oxalate.

Le spectre RMN du ¹³P de l'effluent basique minéralisé montre, quant à lui, que les espèces phosphorées, initialement présentes dans l'effluent, se transforment intégralement en phosphate.

La réaction de minéralisation par l'ozone se traduit aussi par une diminution régulière de la concentration en matière organique. Cette évolution peut être appréciée par le suivi de deux grandeurs macroscopiques représentatives de la concentration en molécules organiques : à savoir, le Carbone Organique Total et la Demande Chimique en Oxygène.

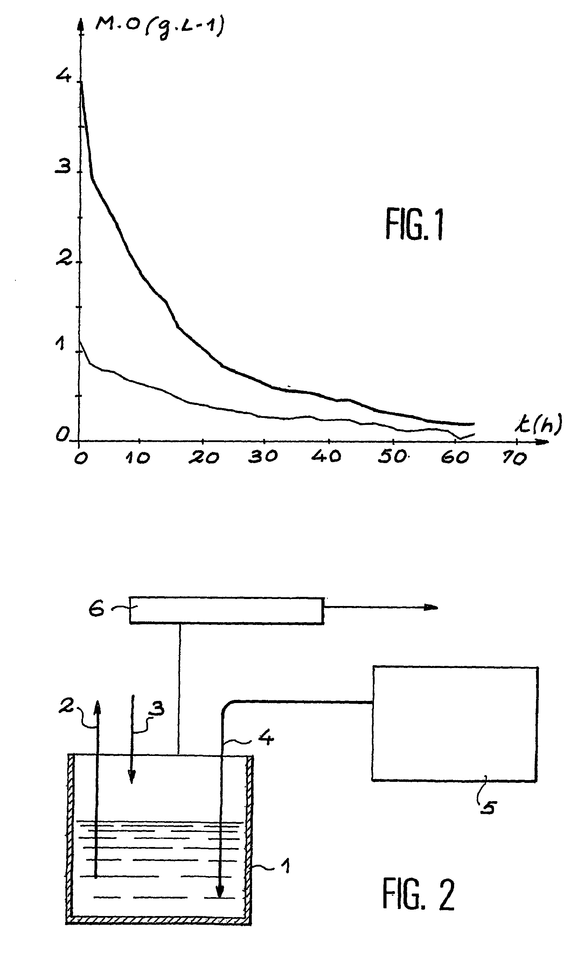

La figure 1 présente l'évolution de la teneur en matières organiques (M. O.), exprimée en g.L⁻¹, en fonction du temps (t) en heures, la courbe en gras représente la DCO et la courbe en trait fin représente la COT, au cours de la minéralisation basique d'un effluent type.

Quelle que soit la concentration initiale en matière organique, qui peut être, par exemple, de 10 à 1 gramme par litre, le profil de consommation d'ozone est reproductible.

Environ 1/3 de l'ozone est consommé pour atteindre 70 % de taux de minéralisation.

Environ 2/3 de l'ozone est consommé pour atteindre 90 % de taux de minéralisation.

La quantité d'ozone consommé durant l'étape de minéralisation en milieu basique sera généralement d'environ 8 à 9 grammes d'ozone par gramme initial de matière organique. L'ozoneur installé sera donc dimensionné en fonction de cette proportion et de la durée souhaitée du traitement d'un lot.

On a vu plus haut que la réaction de minéralisation par l'ozone des molécules organiques forme des sels, par exemple, de sodium, en solution, la quantité de sodium utilisée est donc généralement, de préférence, d'environ 1,4 grammes par gramme de matière organique initiale. La concentration initiale en base, telle que la soude doit, généralement, être suffisante pour permettre la formation des différents sels et garder un pH supérieur à 9 à, de préférence encore, supérieur à 12, qui garantit un bon rendement du transfert d'ozone en solution.

Le tableau I résume les caractéristiques d'un effluent type avant et après l'étape de minéralisation basique :

**Tableau I :**

| caractéristiques d'un effluent type avant et après la minéralisation basique. | | |
|---|---|---|
| Caractéristiques | Avant minéralisation | Après minéralisation |
| COT/g.l⁻¹ | 1,2 | 0,1 |
| DCO/g.l⁻¹ | 4,00 | 0,06 |
| NaOH/mol.l⁻¹ | 0,75 | 0,65 |
| Composition | Matières organiques : 2 g.l⁻¹ | Carbonate de Na : 3,5 g.: |
| | | Oxalate de Na : 0,8 g.l⁻ |
| | | Phosphate de Na : 0,22 g. |

On constate donc que la première étape de minéralisation ou minéralisation basique est caractérisée en ce qu'elle permet de transformer la quasi-totalité de la matière organique, initialement présente, en mélange de carbonate de sodium et d'oxalate de sodium.

Grâce à la première minéralisation et au suivi, par exemple par chromatographie, des espèces caractéristiques, par exemple de l'oxalate de sodium, du carbonate de sodium ou des acides carboxyliques intermédiaires, l'absence de double liaison peut être garantie. Il en résulte que la formation d'ozonides et les risques qui leur sont liés sont complètement éliminés.

Suite à l'étape de minéralisation basique, selon l'invention, l'effluent basique minéralisé est rendu acide.

La seconde étape de minéralisation, ou minéralisation acide, est généralement enclenchée lorsque la totalité de la matière organique est sous forme de sels d'acides carboxyliques simples et plus particulièrement sous forme de sels carbonate de métal alcalin ou alcalino-terreux, par exemple de Na et oxalate de métal alcalin ou alcalino-terreux, par exemple de Na.

L'acidification est réalisée, de préférence, par addition à l'effluent basique minéralisé d'une solution d'acide minéral, par exemple d'acide nitrique. La solution d'acide est ajoutée à l'effluent de façon à ce que le pH de l'effluent soit inférieur à 7 et, de préférence inférieur à 1, et à ce que la concentration finale en acide minéral, après ajout d'acide, acidification, soit de 0,1 à 5 mol.L⁻¹.

Une fois que l'effluent a été rendu acide, on procède alors à la seconde étape de minéralisation, par mise en contact de l'effluent rendu acide avec l'agent d'oxydation gazeux. En effet, selon l'invention, on procède à l'enchaînement de deux étapes distinctes, successives, de minéralisation.

La seconde étape de minéralisation ou minéralisation acide est réalisée sensiblement dans les mêmes conditions, en particulier de température, que la première étape de minéralisation ou minéralisation basique.

En pratique, l'injection et le bullage du gaz dans l'effluent sont arrêtés après la minéralisation basique et est remis en action pour procéder à la minéralisation acide.

La poursuite de la minéralisation en milieu acide, selon la seconde étape de minéralisation, permet de transformer l'oxalate, de préférence de sodium résiduel en carbonate, de préférence de sodium, instable en milieu acide, qui se dégage donc sous forme de dioxyde de carbone gazeux selon la réaction.

Na₂CO₃ + 2H⁺NO₃⁻ = CO₂ + 2 NaNO₃ + H₂O

L'oxalate de Na, à une concentration initiale d'environ 500 mg.L⁻¹, disparaît progressivement au cours du temps et voit sa concentration atteindre, par exemple, environ 300 mg.L⁻¹, au bout de 2 heures, et environ 0, au bout de 6 heures.

Le tableau II résume les caractéristiques d'un effluent de dégraissage type, à savoir une solution aqueuse tensioactive de décontamination d'une usine de retraitement de combustible irradié, préalablement minéralisée en milieu basique, avant et après l'étape de minéralisation acide.

**Tableau II :**

| caractéristiques d'un effluent type avant et après l'étape de minéralisation acide. | | |
|---|---|---|
| Caractéristiques | Avant minéralisation | Après minéralisation |
| COT/g.l⁻¹ | 0,1 | 0 |
| DCO/g.l⁻¹ | 0,06 | 0 |
| Composition | Carbonate de Na : 3,5 g.l⁻¹ | Carbonate de Na : 0 g.l⁻¹ |
| | Oxalate de Na : 0,8 g.l⁻¹ | Oxalate de Na : 0 g.l⁻¹ |
| | Phosphate de Na : 0,22 g.l⁻¹ | Phosphate de Na : 0,22 g.: |

On en conclut que l'enchaînement des séquences de minéralisation du procédé selon l'invention permet d'éliminer la totalité de la matière organique contenue dans un effluent aqueux d'assainissement des usines de retraitement des combustibles irradiés.

Une installation pour la mise en oeuvre du procédé selon l'invention est décrite sur la figure 2.

Le procédé de la présente invention peut être mis en oeuvre très simplement dans n'importe quelle installation industrielle, telle qu'une usine de traitement de combustibles irradiés. Pour cela, il suffit de disposer d'une cuve de réaction (1) contenant l'effluent à minéraliser. La cuve de réaction comporte au moins :
- un système de prélèvement d'échantillon (2) qui permet de suivre la réaction et d'enchaîner les étapes de minéralisation ;
- un dispositif d'injection de réactifs liquides (3) pour enchaîner les phases basiques et acides de minéralisation ;
- un dispositif d'injection de gaz (4) pour amener le mélange gazeux contenant l'ozone à l'effluent ;
- un circuit de traitement des gaz, sur lequel on pourra placer un dispositif de destruction de l'ozone résiduel, qui pourra contenir un système de destruction, par exemple thermique, de l'ozone (6).

L'ozone sera produit à partir d'un générateur d'ozone (5) dimensionné pour produire le flux d'ozone nécessaire au traitement du volume d'effluent contenu dans la cuve (1).

L'installation pour la mise en oeuvre du procédé de la présente invention ne nécessite qu'un aménagement mineur des installations existantes, qui se résume à la mise en place d'un circuit de production d'ozone sur n'importe quel circuit d'injection de gaz d'une cuve, qui sera dédiée à l'opération. La cuve de minéralisation peut être n'importe quelle cuve du procédé et sera choisie en fonction des volumes d'effluents à traiter et n'a pas à être réalisée en un matériau différent de celui généralement utilisé dans les usines de traitement de combustible irradié.

## Revendications

1. Procédé de traitement d'un effluent aqueux contenant des matières organiques en solution, comprenant les étapes successives suivantes :
- l'effluent est rendu basique ;
- l'effluent rendu basique est minéralisé par mise en contact avec un agent d'oxydation gazeux ;
- l'effluent basique minéralisé est rendu acide ;
- l'effluent rendu acide est de nouveau minéralisé par mise en contact avec l'agent d'oxydation gazeux.

2. Procédé selon la revendication 1, dans lequel le gaz oxydant est un mélange constitué d'ozone et d'au moins un autre gaz choisi, de préférence, parmi l'oxygène et l'azote.

3. Procédé selon la revendication 1, dans lequel l'effluent rendu basique a un pH supérieur à 9, de préférence supérieur à 12.

4. Procédé selon l'une quelconque des revendications 1 à 3, dans lequel l'effluent est rendu basique par addition d'hydroxyde de métal alcalin ou alcalino-terreux, tel que l'hydroxyde de sodium, de lithium, de calcium, de magnésium, ou de potassium.

5. Procédé selon la revendication 4, dans lequel l'hydroxyde de métal alcalin ou alcalino-terreux, est de l'hydroxyde de sodium qui est ajouté à une concentration supérieure ou égale à 1,4 g de sodium par gramme de COT dans l'effluent.

6. Procédé selon la revendication 1, dans lequel l'effluent basique minéralisé est rendu acide par addition d'une solution d'acide minéral, de préférence d'acide nitrique.

7. Procédé selon l'une quelconque des revendications 1 à 6, dans lequel la concentration finale en acide minéral de l'effluent rendu acide est de 0,1 à 5 mol.L⁻¹.

8. Procédé selon l'une quelconque des revendications 1 à 7, dans lequel la première étape de minéralisation est suivie par mesure de la concentration des espèces en solution dans l'effluent à traiter, par exemple par chromatographie.

9. Procédé selon la revendication 8, dans lequel la première étape de minéralisation est suivie par la mesure de la concentration en formiate, acétate, glycolate, carbonate et oxalate de préférence de métal alcalin, tel que le Na.

10. Procédé selon l'une quelconque des revendications 1 à 9, dans lequel la seconde étape de minéralisation est enclenchée lorsque la totalité des matières organiques est sous forme de sels d'acides carboxyliques.

11. Procédé selon la revendication 10, dans lequel lesdits sels sont des carbonates et oxalates, de préférence de métal alcalin, tel que le sodium.

12. Procédé selon l'une quelconque des revendications précédentes, dans lequel les étapes de minéralisation sont réalisées à une température de 5 à 70°C, de préférence de 20 à 30°C.

13. Procédé selon l'une quelconque des revendications précédentes, dans lequel les matières organiques sont des tensioactifs ou surfactants, et/ou des complexants ou chélatants.

14. Procédé selon l'une quelconque des revendications précédentes, dans lequel l'effluent à traiter est un effluent acide.

15. Procédé selon l'une quelconque des revendications précédentes, dans lequel l'effluent à traiter est un effluent radioactif.

16. Procédé selon la revendication 15, dans lequel l'effluent provient de l'assainissement d'une installation nucléaire, telle qu'une usine de retraitement de combustible irradié.

## Patentansprüche

1. Verfahren zum Behandeln eines wässrigen Abstroms, der gelöste organische Materialien enthält, das die nachstehend angegebenen, aufeinanderfolgenden Stufen umfasst:
- der Abstrom wird basisch gemacht;
- der basisch gemachte Abstrom wird durch Inkontaktbringen mit einem gasförmigen Oxidationsmittel mineralisiert;
- der mineralisierte basische Abstrom wird angesäuert und
- der angesäuerte Abstrom wird durch Inkontaktbringen mit einem gasförmigen Oxidationsmittel erneut mineralisiert.

2. Verfahren nach Anspruch 1, bei dem das oxidierende Gas eine Mischung ist, bestehend aus Ozon und mindestens einem anderen Gas, das vorzugsweise ausgewählt wird aus der Gruppe Sauerstoff und Stickstoff.

3. Verfahren nach Anspruch 1, bei dem der basisch gemachte Abstrom einen pH von > 9, vorzugsweise von > 12, hat.

4. Verfahren nach einem der Ansprüche 1 bis 3, bei dem der Abstrom durch Zugabe eines Alkalimetall- oder Erdalkalimetallhydroxids, wie z.B. Natriumhydroxyd, Lithiumhydroxid, Calciumhydroxid, Magnesiumhydroxid oder Kaliumhydroxid, basisch gemacht wird.

5. Verfahren nach Anspruch 4, bei dem das Alkalimetall- oder Erdalkalimetallhydroxid Natriumhydroxid ist, das in einer Konzentration von ≥ 1,4 g Natrium pro Gramm COT in dem Abstrom, zugegeben wird.

6. Verfahren nach Anspruch 1, bei dem der mineralisierte basische Abstrom durch Zugabe einer Mineralsäure-Lösung, vorzugsweise einer Salpetersäure-Lösung, angesäuert wird.

7. Verfahren nach einem der Ansprüche 1 bis 6, bei dem die Endkonzentration der Mineralsäure in dem angesäuerten Abstrom 0,1 bis 5 mol/L beträgt.

8. Verfahren nach einem der Ansprüche 1 bis 7, bei dem auf die erste Mineralisierungsstufe die Messung der Konzentration der in dem zu behandelnden Abstrom gelösten Species (lonen), beispielsweise durch Chromatographie, folgt.

9. Verfahren nach Anspruch 8, bei dem auf die erste Mineralisierungsstufe die Messung der Formiat-, Acetat-, Glycolat-, Carbonat- und Oxalat-Konzentration, vorzugsweise eines Alkalimetalls wie Na, folgt.

10. Verfahren nach einem der Ansprüche 1 bis 9, bei dem die zweite Mineralisierungsstufe gestartet wird, wenn die Gesamtheit der organischen Materialien in Form von Carbonsäuresalzen vorliegt.

11. Verfahren nach Anspruch 10, bei dem die genannten Salze Carbonate und Oxalate, vorzugsweise eines Alkalimetalls wie Natrium, sind.

12. Verfahren nach einem der vorhergehenden Ansprüche, bei dem die Mineralisierungsstufen bei einer Temperatur von 5 bis 70 °C, vorzugsweise von 20 bis 30 °C, durchgeführt werden.

13. Verfahren nach einem der vorhergehenden Ansprüche, bei dem die organischen Materialien Tenside oder Surfactants und/oder Komplexbildner oder Chelatbildner sind.

14. Verfahren nach einem der vorhergehenden Ansprüche, bei dem der zu behandelnde Abstrom ein saurer Abstrom ist.

15. Verfahren nach einem der vorhergehenden Ansprüche, bei dem der zu behandelnde Abstrom ein radioaktiver Abstrom ist.

16. Verfahren nach Anspruch 15, bei dem der Abstrom aus der Kanalisation eines Kernreaktors, beispielsweise einer Anlage zur Wiederaufarbeitung abgebrannter Brennstoffe, stammt.

## Claims

1. Method of treating an aqueous effluent containing organic matters in solution, comprising the following successive steps:
- the effluent is rendered basic;
- the effluent rendered basic is mineralized by being brought into contact with a gaseous oxidizing agent;
- the mineralized basic effluent is rendered acidic; and
- the effluent rendered acidic is again mineralized by being brought into contact with the gaseous oxidizing agent.

2. Method according to Claim 1, in which the oxidizing gas is a mixture consisting of ozone and at least one other gas preferably chosen from oxygen and nitrogen.

3. Method according to Claim 1, in which the effluent rendered basic has a pH of greater than 9, preferably greater than 12.

4. Method according to any one of Claims 1 to 3, in which the effluent is rendered basic by addition of an alkali or alkaline-earth metal hydroxide, such as sodium hydroxide, lithium hydroxide, calcium hydroxide, magnesium hydroxide or potassium hydroxide.

5. Method according to Claim 4, in which the alkali or alkaline-earth metal hydroxide is sodium hydroxide, which is added at a concentration of greater than or equal to 1.4 g of sodium per gram of TOC in the effluent.

6. Method according to Claim 1, in which the mineralized basic effluent is rendered acidic by adding a solution of mineral acid, preferably nitric acid.

7. Method according to any one of Claims 1 to 6, in which the final concentration of mineral acid of the effluent rendered acidic is 0.1 to 5 mol/l.

8. Method according to any one of Claims 1 to 7, in which the first mineralization step is monitored by measuring the concentration of the species in solution in the effluent to be treated, for example by chromatography.

9. Method according to Claim 8, in which the first mineralization step is monitored by measuring the concentration of formate, acetate, glycolate, carbonate and oxalate, preferably of alkali metal such as Na formate, acetate, glycolate, carbonate and oxalate.

10. Method according to any one of Claims 1 to 9, in which the second mineralization step is initiated when all of the organic matters are in the form of carboxylic acid salts.

11. Method according to Claim 10, in which said salts are carbonates and oxalates, preferably of an alkali metal such as sodium.

12. Method according to any one of the preceding claims, in which the mineralization steps are carried out at a temperature of 5 to 70°C, preferably of 20 to 30°C.

13. Method according to any one of the preceding claims, in which the organic matters are surface-active agents or surfactants, and/or complexing agents or chelating agents.

14. Method according to any one of the preceding claims, in which the effluent to be treated is an acidic effluent.

15. Method according to any one of the preceding claims, in which the effluent to be treated is a radioactive effluent.

16. Method according to Claim 15, in which the effluent comes from the clean-up of a nuclear facility, such as an irradiated-fuel reprocessing plant.
